# FASCICULE DE BREVET EUROPEEN

(11) **EP 3 098 149 B1**
(45) Date de publication et mention de la délivrance du brevet: **08.11.2017**
(21) Numéro de dépôt: 16170129.7
(22) Date de dépôt: 18.05.2016
(51) Int. Cl.: B62K 3/02, B62K 19/02, B62K 19/18

(54) **CADRE DE VELO**
FAHRRADRAHMEN
BICYCLE FRAME

(30) Priorité: 26.05.2015 FR 1554712
(43) Date de publication de la demande: 30.11.2016
(73) Titulaire: Cycles Lapierre, 21000 Dijon (FR)
(72) Inventeur: Gribaudo, Rémi, 21000 Dijon (FR)
(74) Mandataire: Gevers SA

(56) Documents cités:
- EP-A2- 2 112 061
- WO-A1-92/15477
- FR-A1- 2 889 834

## Description

### Domaine technique

La présente invention concerne un cadre de vélo de route dit triangulé comportant un tube de selle, un tube horizontal et un tube oblique, et des moyens d'amortissement des chocs intégrées audit cadre.

### Etat de la technique

Dans le domaine du vélo, il est bien connu que les vélos dits de route comportent un cadre dit triangulé rigide constitué d'un tube de selle, d'un tube oblique assemblé à l'extrémité inférieure du tube de selle et un tube horizontal dont les extrémités proximales et distales sont assemblées à l'extrémité supérieure du tube selle et respectivement à un tube de fourche, le tube oblique étant solidarisé audit tube de fourche, un bras arrière solidarisé à l'extrémité inférieure du tube de selle à proximité d'un boîtier de pédalier, et des haubans dont les extrémités sont solidaires de l'extrémité arrière du bras arrière et respectivement du tube de selle. Ces cadres rigides des vélos de route offrent peu de capacités d'absorption des chocs, les chocs dus aux irrégularités des routes, telles que les bosses et les trous, étant amortis uniquement par les pneumatiques des roues.

Il est également bien connu que les vélos dits VTT spécifiquement conçus pour la conduite hors route sont souvent équipés d'amortisseurs avant et/ou arrière pour amortir l'impact sur les roues. Ces amortisseurs comportent généralement un ressort précontraint et des éléments télescopiques qui absorbent les impacts sur les roues.

Ces amortisseurs de vélos présentent l'inconvénient d'être lourds et de réduire la rigidité du cadre de vélo de sortent qu'ils sont inadaptés pour les vélos de route pour lesquels la légèreté, la maniabilité et la rigidité sont essentiels.

Afin de remédier à ces inconvénients, on a déjà imaginé des cadres de vélo de route comportant des moyens d'amortissement des chocs.

C'est le cas notamment de la demande de brevet américain US 2014/0265231 qui décrit un vélo comprenant des roues et un cadre supporté sur les roues. Le cadre comprend un ensemble hauban définissant un axe de hauban et comprenant un ensemble ressort ayant un élément de ressort (par exemple, un ressort à lames) à un angle d'au moins 5 degrés par rapport à l'axe de hauban. L'élément de ressort a une largeur qui est au moins 4 fois plus grande que son épaisseur. La demande de brevet décrit également un vélo comprenant un cadre qui comporte un tube de selle et un ensemble hauban définissant un axe de hauban. L'ensemble hauban comprend un élément de ressort décalé par rapport à l'axe de hauban et non-parallèle à l'axe de hauban. L'ensemble hauban comprend en outre un tube de hauban, et l'élément de ressort comprend une partie arrière fixée au tube de hauban. L'élément de ressort peut également comprendre une partie avant fixée à un tube de selle du cadre de bicyclette.

Bien que ce type de cadre de vélo de route permet d'augmenter l'amortissement des chocs grâce aux moyens d'amortissement positionnés entre le tube de selle et les haubans reliant le tube de selle au bras arrière qui porte le moyeu de la roue arrière, il présente une rigidité insuffisante.

### Divulguation de l'invention

L'un des buts de l'invention est donc de remédier à ces inconvénients en proposant un cadre de vélo de route de conception simple et peu onéreuse, procurant un amortissement des chocs tout en procurant une grande rigidité du cadre.

A cet effet et conformément à l'invention, il est proposé un cadre de vélo de route, constitué d'au moins un tube de selle, d'un tube oblique assemblé à l'extrémité inférieure du tube de selle et d'un tube horizontal dont les extrémités proximales et distales sont assemblées à l'extrémité supérieure du tube selle et respectivement à un tube de fourche, le tube oblique étant solidarisé audit tube de fourche, un bras arrière solidarisé à l'extrémité inférieure du tube de selle à proximité d'un boîtier de pédalier, et des haubans dont les extrémités sont solidaires de l'extrémité arrière du bras arrière et respectivement du tube de selle ; ledit cadre de vélo est remarquable en ce que l'extrémité proximale du tube horizontal comporte deux segment, un premier segment supérieur solidaire de l'extrémité supérieure du tube de selle et un segment inférieur prenant appui sur au moins un élément amortisseur obtenu dans un matériau résilient et solidaire du tube selle.

On comprend bien que le segment supérieur du tube horizontal procure une rigidité suffisante au cadre tout en permettant une légère flexion et que le segment inférieur permet l'amortissement des chocs en coopérant avec l'élément amortisseur résilient.

De préférence, l'élément amortisseur consiste en une pièce insérée dans une portion de tube solidarisée au tube de selle et s'étendant au droit du segment inférieur du tube horizontal.

Ladite portion de tube recevant l'élément amortisseur et le segment inférieur du tube horizontal présentent une section circulaire.

Par ailleurs, ledit élément amortisseur est constitué d'un corps cylindrique inséré dans la portion de tube solidaire du tube de selle et d'une collerette annulaire faisant saillie de ladite portion de tube, l'extrémité libre du segment inférieur du tube horizontal prenant appui sur ladite collerette.

De préférence, l'élément amortisseur est obtenu dans un élastomère tel que du caoutchouc synthétique ou naturel.

De manière avantageuse, le segment supérieur du tube horizontal présente une section aplatie procurant une bonne déformation tout en assurant un maintien de la rigidité au niveau de la liaison avec le tube de selle.

Accessoirement, le cadre suivant l'invention comporte un carter coiffant la portion de tube, l'élément amortisseur inséré dans ladite portion de tube, et le segment inférieur du tube horizontal.

Afin de ne pas interférer avec l'élément amortisseur, le carter est obtenu dans une matière polymérique souple telle que du Polyéthylène par exemple.

De plus, afin que les chocs au niveau de la roue arrière puissent être dissipés de manière optimale par l'élément amortisseur, les haubans sont solidarisés au tube de selle à la même hauteur que la portion de tube dans lequel est inséré l'élément amortisseur.

### Brève description des dessins

D'autres avantages et caractéristiques ressortiront mieux de la description qui va suivre, d'une unique variante d'exécution, donnée à titre d'exemple non limitatif, du cadre de vélo suivant l'invention, à partir des dessins annexés sur lesquels :
- la figure 1 est une vue de côté du cadre de vélo conforme à l'invention,
- la figure 2 est une vue en perspective déchirée des moyens d'amortissement du cadre de vélo conforme à l'invention,
- la figure 3 est une vue en perspective déchirée des moyens d'amortissement suivant l'invention coiffés d'un carter.

### Mode de réalisation de l'invention

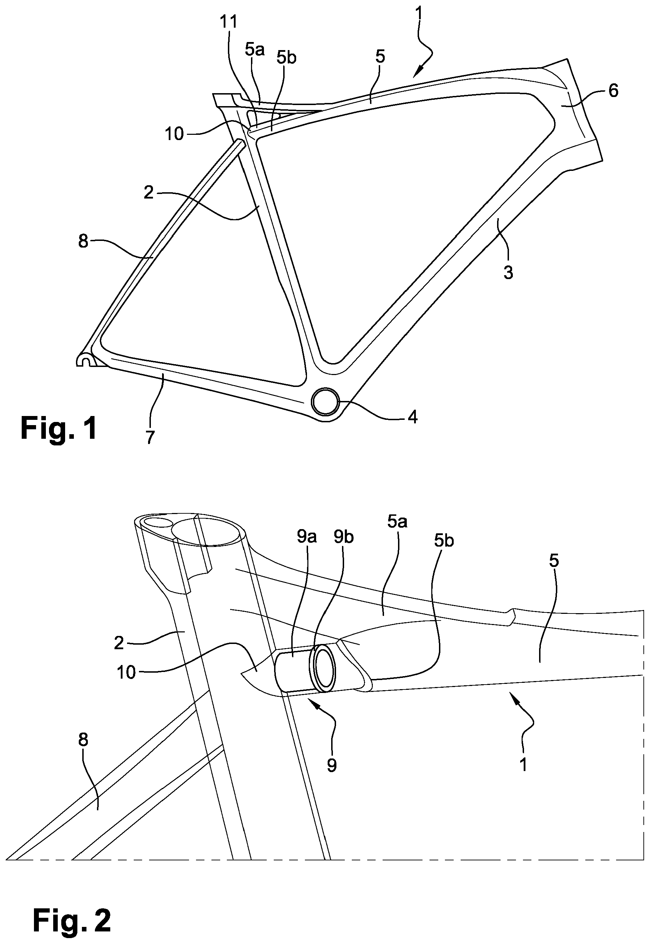

En référence à la figure 1, le cadre de vélo 1 suivant l'invention est constitué de manière usuelle d'un tube de selle 2, s'étendant globalement, d'un tube oblique 3 assemblé à l'extrémité inférieure du tube de selle 2, au niveau d'un boitier de pédalier 4, et d'un tube horizontal 5 dont les extrémités proximales et distales sont assemblées à l'extrémité supérieure du tube selle 2 et respectivement à un tube de fourche 6, le tube oblique 3 étant solidarisé audit tube de fourche 6, un bras arrière 7 solidarisé à l'extrémité inférieure du tube de selle 2 au niveau du boîtier de pédalier 4, et des haubans 8 dont les extrémités sont solidaires de l'extrémité arrière du bras arrière 7 et respectivement du tube de selle 2. Le tube de fourche 6 reçoit une fourche portant à son extrémité inférieure l'axe du moyeu de la roue avant, ladite fourche et la roue avant n'étant pas représentées sur la figure 1. Un guidon est de manière classique solidarisé à l'extrémité distale d'une potence solidaire de l'extrémité supérieure de la fourche pour assurer la direction du vélo, le guidon et la potence n'étant également pas représentés. De plus, le tube de selle 2 est apte à recevoir une tige de selle, non représentée sur la figure 1, comprenant à son extrémité supérieure une selle sur laquelle prend position le cycliste.

Les différents tubes de selle 2, oblique 3, horizontal 5 et de fourche 6 sont solidarisés les uns aux autres de préférence par soudage ; Toutefois, il va de soi que lesdits tubes pourront être assemblés par tout moyen approprié bien connu de l'Homme du Métier tel que par collage et/ou par emboîtement par exemple sans pour autant sortir du cadre de l'invention.

En référence aux figures 1 à 3, l'extrémité proximale du tube horizontal 5, c'est-à-dire l'extrémité du tube horizontal 5 solidaire du tube de selle 2, comporte deux segment 5a et 5b, un premier segment supérieur 5a solidaire de l'extrémité supérieure du tube de selle 2 et un second segment inférieur 5b prenant appui sur un élément amortisseur 9 obtenu dans un matériau résilient solidaire du tube selle 2. Ledit élément amortisseur 9 consiste en une pièce insérée dans une portion de tube 10 solidarisée au tube de selle 2 et s'étendant au droit du segment inférieur 5b du tube horizontal 5. Ladite portion de tube 10 est de préférence soudée à l'extrémité supérieure du tube de selle ; Toutefois, il va de soi que ladite portion de tube 10 pourra être assemblé au tube de selle 2 par tout moyen approprié tel que par collage et/ou par emboîtement par exemple ou la portion de tube 10 pourra être obtenu d'un seul tenant avec le tube de selle 2 sans pour autant sortir du cadre de l'invention.

On comprend bien que le segment supérieur du tube horizontal procure une rigidité suffisante au cadre tout en permettant une légère flexion et que le segment inférieur permet l'amortissement des chocs en coopérant avec l'élément amortisseur résilient.

Dans cet exemple particulier de réalisation, ladite portion de tube 10 recevant l'élément amortisseur 9 et le segment inférieur 5b du tube horizontal 5 présentent une section sensiblement circulaire. Par ailleurs, ledit élément amortisseur 9 est constitué d'un corps cylindrique 9a, dont le diamètre extérieur est légèrement inférieur au diamètre interne de la portion de tube 10, inséré dans la portion de tube 10 solidaire du tube de selle 2 et d'une collerette annulaire 9b faisant saillie de ladite portion de tube 10, l'extrémité libre du segment inférieur 5b du tube horizontal 5 prenant appui sur ladite collerette 9b.

Il va de soi que la portion de tube 10 et le segment inférieur 5b du tube horizontal 5 pourront présenter une section de forme quelconque, le corps 9a et la collerette 9b de l'élément amortisseur 9 présentant alors une section de même forme sans pour autant sortir du cadre de l'invention.

Ledit élément amortisseur est obtenu dans un polymère élastique et de préférence dans un élastomère tel que du caoutchouc naturel ou *cis*-1,4-polyisoprène (NR), du caoutchouc synthétique ou polyisoprène synthétique (IR), du polybutadiène (BR) ou du copolymère styrène-butadiène (SBR) par exemple.

Par ailleurs, on observera que le corps 9a de l'élément amortisseur 9 pourra être creux ou plein sans sortir du cadre de l'invention.

De plus, de manière avantageuse, le segment supérieur 5a du tube horizontal 5 présente une section aplatie procurant une bonne déformation du segment supérieur 5a tout en assurant un maintien de la rigidité au niveau de la liaison dudit segment supérieur 5a avec le tube de selle 2. On entend par tube aplati, un tube présentant une hauteur inférieure à la largeur du tube. Néanmoins, il va de soi que le segment supérieur 5a pourra présenter une section de forme quelconque sans pour autant sortir du cadre de l'invention.

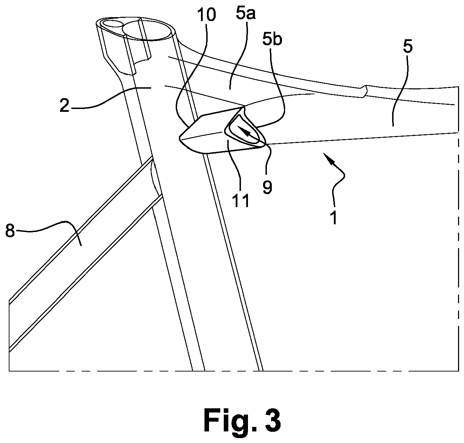

Accessoirement, en référence aux figures 1 et 3, le cadre suivant l'invention comporte un carter 11 coiffant la portion de tube 10, l'élément amortisseur 9 inséré dans ladite portion de tube 10, et le segment inférieur 5b du tube horizontal 5. Afin de ne pas interférer avec l'élément amortisseur 9, ledit carter est obtenu dans une matière polymérique souple telle que du Polyéthylène par exemple.

De plus, afin que les chocs au niveau de la roue arrière puissent être dissipés de manière optimale par l'élément amortisseur 9, les haubans 8 sont de préférence solidarisés au tube de selle 2 à la même hauteur que la portion de tube 10 dans lequel est inséré l'élément amortisseur 9.

Il va de soi que l'élément amortisseur 9 pourra être positionné dans un logement pratiqué dans le tube de selle 2 sans pour autant sortir du cadre de l'invention. De plus, il est bien évident que l'élément amortisseur pourra être substitué par une pluralité d'éléments amortisseurs sans pour autant sortir du cadre de l'invention.

Enfin, il est bien évident que les exemples que l'on vient de donner ne sont que des illustrations particulières en aucun cas limitatives quant aux domaines d'application de l'invention.

## Revendications

1. Cadre de vélo de route (1), constitué d'au moins un tube de selle (2), d'un tube oblique (3) assemblé à l'extrémité inférieure du tube de selle (2) et d'un tube horizontal (5) dont les extrémités proximales et distales sont assemblées à l'extrémité supérieure du tube selle (2) et respectivement à un tube de fourche (6), le tube oblique (3) étant solidarisé audit tube de fourche (6), un bras arrière (7) solidarisé à l'extrémité inférieure du tube de selle (2) à proximité d'un boîtier de pédalier (4), et des haubans (8) dont les extrémités sont solidaires de l'extrémité arrière du bras arrière (7) et respectivement du tube de selle (2), ***caractérisé* en ce que** l'extrémité proximale du tube horizontal (5) comporte deux segments (5a,5b), un premier segment supérieur (5a) solidaire de l'extrémité supérieure du tube de selle (2) et un second segment inférieur (5b) prenant appui sur au moins un élément amortisseur (9) obtenu dans un matériau résilient et solidaire du tube selle (2).

2. Cadre de vélo de route suivant la revendication 1 ***caractérisé* en ce que** l'élément amortisseur (9) consiste en une pièce insérée dans une portion de tube (10) solidarisée au tube de selle (2) et s'étendant au droit du segment inférieur (5b) du tube horizontal (5).

3. Cadre de vélo de route suivant la revendication 2 ***caractérisé* en ce que** la portion de tube (10) recevant l'élément amortisseur (9) et le segment inférieur (5b) du tube horizontal (5) présentent une section circulaire.

4. Cadre de vélo de route suivant la revendication 3 ***caractérisé* en ce que** l'élément amortisseur (9) est constitué d'un corps cylindrique (9a) inséré dans la portion de tube (10) solidaire du tube de selle (2) et d'une collerette annulaire (9b) faisant saillie de ladite portion de tube (10), l'extrémité libre du segment inférieur (5b) du tube horizontal (5) prenant appui sur ladite collerette (9b).

5. Cadre de vélo de route suivant l'une quelconque des revendications 1 à 4 ***caractérisé* en ce que** l'élément amortisseur (9) est obtenu dans un élastomère.

6. Cadre de vélo de route suivant l'une quelconque des revendications 1 à 5 ***caractérisé* en ce que** le segment supérieur (5a) du tube horizontal (5) présente une section aplatie.

7. Cadre de vélo de route suivant l'une quelconque des revendications 2 à 6 ***caractérisé* en ce qu'**il comporte un carter (11) coiffant la portion de tube (10), l'élément amortisseur (9) inséré dans ladite portion de tube (10), et le segment inférieur (5b) du tube horizontal (5).

8. Cadre de vélo de route suivant la revendication 7 ***caractérisé* en ce que** le carter (11) est obtenu dans une matière polymérique souple.

9. Cadre de vélo de route suivant la revendication 8 ***caractérisé* en ce que** le carter (11) est obtenu dans du Polyéthylène.

10. Cadre de vélo de retour suivant l'une quelconque des revendications 1 à 9 ***caractérisé* en ce que** l'élément amortisseur (9) est obtenu dans du caoutchouc synthétique ou naturel.

11. Cadre de vélo de route suivant l'une quelconque des revendications 2 à 10 ***caractérisé* en ce que** les haubans (8) sont solidarisés au tube de selle (2) à la même hauteur que la portion de tube (10) dans lequel est inséré l'élément amortisseur (9).

## Patentansprüche

1. Straßenfahrradrahmen (1), gebildet aus mindestens einem Sattelrohr (2), einem schrägen Rohr (3), das mit dem unteren Ende des Sattelrohrs (2) verbunden ist, und einem horizontalen Rohr (5), dessen proximales und distales Ende mit dem oberen Ende des Sattelrohrs (2) und beziehungsweise einem Gabelrohr (6) verbunden sind, wobei das schräge Rohr (3) mit dem Gabelrohr (6) fest verbunden ist, ein hinterer Arm (7) mit dem unteren Ende des Sattelrohrs (2) in der Nähe eines Pedalkastens (4) fest verbunden ist, und Verspannungen (8), deren Enden mit dem hinteren Ende des hinteren Arms (7) und beziehungsweise dem Sattelrohr (2) verbunden sind, **dadurch gekennzeichnet, dass** das proximale Ende des horizontalen Rohrs (5) zwei Segmente (5a, 5b) aufweist, ein erstes oberes Segment (5a), das mit dem oberen Ende des Sattelrohrs (2) fest verbunden ist, und ein zweites unteres Segment (5b), das sich auf mindestens einem Dämpferelement (9), das aus einem resilienten Material hergestellt und mit dem Sattelrohr (2) fest verbunden ist, abstützt.

2. Straßenfahrradrahmen nach Anspruch 1 **dadurch gekennzeichnet, dass** das Dämpferelement (9) aus einem Teil besteht, das in einen Rohrabschnitt (10) eingesetzt ist, der mit dem Sattelrohr (2) fest verbunden ist und sich am unteren Segment (5b) des horizontalen Rohrs (5) erstreckt.

3. Straßenfahrradrahmen nach Anspruch 2, **dadurch gekennzeichnet, dass** der Rohrabschnitt (10), welcher das Dämpferelement (9) aufnimmt, und das untere Segment (5b) des horizontalen Rohrs (5) einen kreisförmigen Querschnitt haben.

4. Straßenfahrradrahmen nach Anspruch 3, **dadurch gekennzeichnet, dass** das Dämpferelement (9) von einem zylindrischen Körper (9a), der in den Rohrabschnitt (10), der mit dem Sattelrohr (2) fest verbunden ist, eingesetzt ist, und einem ringförmigen Kragen (9b), der über den Rohrabschnitt (10) hinausragt, gebildet ist, wobei sich das freie Ende des unteren Segments (5b) des horizontalen Rohrs (5) auf dem Kragen (9b) abstützt.

5. Straßenfahrradrahmen nach einem der Ansprüche 1 bis 4, **dadurch gekennzeichnet, dass** das Dämpferelement (9) aus einem Elastomer hergestellt ist.

6. Straßenfahrradrahmen nach einem der Ansprüche 1 bis 5, **dadurch gekennzeichnet, dass** das obere Segment (5a) des horizontalen Rohrs (5) einen abgeflachten Querschnitt aufweist.

7. Straßenfahrradrahmen nach einem der Ansprüche 2 bis 6, **dadurch gekennzeichnet, dass** er eine Gehäuse (11) aufweist, das den Rohrabschnitt (10), das Dämpferelement (9), das in den Rohrabschnitt (10) eingesetzt ist, und das untere Segment (5b) des horizontalen Rohrs (5) bedeckt.

8. Straßenfahrradrahmen nach Anspruch 7, **dadurch gekennzeichnet, dass** das Gehäuse (11) aus einem elastischen Polymermaterial hergestellt ist.

9. Straßenfahrradrahmen nach Anspruch 8, **dadurch gekennzeichnet, dass** das Gehäuse (11) aus Polyethylen hergestellt ist.

10. Straßenfahrradrahmen nach einem der Ansprüche 1 bis 9, **dadurch gekennzeichnet, dass** das Dämpferelement (9) aus synthetischem oder natürlichem Gummi hergestellt ist.

11. Straßenfahrradrahmen nach einem der Ansprüche 2 bis 10, **dadurch gekennzeichnet, dass** die Verspannungen (8) mit dem Sattelrohr (2) in derselben Höhe wie der Rohrabschnitt (10) fest verbunden sind, in welchen das Dämpferelement (9) eingesetzt ist.

## Claims

1. A road bicycle frame (1), made up of at least a seat tube (2), a down tube (3) connected to the lower end of the seat tube (2) and a horizontal tube (5) whose proximal and distal ends are assembled to the upper end of the seat tube (2) and respectively to a fork tube (6), the down tube (3) being integral with said fork tube (6), a rear arm (7) secured to the lower end of the seat tube (2) near a bottom bracket (4), and stays (8) whose ends are secured to the rear end of the rear arm (7) and the seat tube (2), respectively, ***characterized* in that** the proximal end of the horizontal tube (5) comprises two segments (5a, 5b), a first upper segment (5a) integral with the upper end of the seat tube (2) and a second lower segment (5b) bearing on at least one damping element (9) obtained in a resilient material and secured to the seat tube (2).

2. The road bicycle frame according to claim 1, ***characterized* in that** the damping element (9) consists of a piece inserted into a tube portion (10) secured to the seat tube (2) and extending aligned with the lower segment (5b) of the horizontal tube (5).

3. The road bicycle frame according to claim 2, ***characterized* in that** the tube portion (10) receiving the damping element (9) and the lower segment (5b) of the horizontal tube (5) have a circular section.

4. The road bicycle frame according to claim 3, ***characterized* in that** the damping element (9) is made up of a cylindrical body (9a) inserted into the tube portion (10) secured to the seat tube (2) and an annular flange (9b) protruding from said tube portion (10), the free end of the lower segment (5b) of the horizontal tube (5) bearing on said flange (9b).

5. The road bicycle frame according to any one of claims 1 to 4, ***characterized* in that** the damping element (9) is obtained in an elastomer.

6. The road bicycle frame according to any one of claims 1 to 5, ***characterized* in that** the upper segment (5a) of the horizontal tube (5) has a flattened section.

7. The road bicycle frame according to any one of claims 2 to 6, ***characterized* in that** it includes a chain guard (11) covering the tube portion (10), the damping element (9) inserted into said tube portion (10), and the lower segment (5b) of the horizontal tube (5).

8. The road bicycle frame according to claim 7, ***characterized* in that** the chain guard (11) is obtained in a flexible polymeric material.

9. The road bicycle frame according to claim 8, ***characterized* in that** the chain guard (11) is obtained in polyethylene.

10. The road bicycle frame according to any one of claims 1 to 9, ***characterized* in that** the damping element (9) is obtained in synthetic or natural rubber.

11. The road bicycle frame according to any one of claims 2 to 10, ***characterized* in that** the stays (8) are secured to the seat tube (2) at the same height as the tube portion (10) in which the damping element (9) is inserted.
